# EUROPEAN PATENT APPLICATION

(11) **EP 1 316 883 A2**
(43) Date of publication of application: **04.06.2003**
(21) Application number: 02257990.8
(22) Date of filing: 20.11.2002
(51) Int. Cl.: G06F 9/455, G06F 9/45

(54) **System and method for executing program code**

(30) Priority: 29.11.2001 US 997163
(71) Applicant: Hewlett-Packard Company, Palo Alto, CA 94304 (US)
(72) Inventor: Desoli, Giuseppe, Watertown, MA 02472 (US); Bala, Vasanth, Sudbury, MA 01776 (US); Duesterwald, Evelyn, Somerville, MA 02144 (US)
(74) Representative: Jehan, Robert

(57) **Abstract**

The present disclosure relates to a system and method for emulating a computer system. In one arrangement, the system and method pertain to fetching program code (200), translating program code, emitting translated program code into at least one code cache (208), and executing translated code within the at least one code cache in lieu of associated program code when a semantic function of the associated program code is requested (212). Operation of the system and method can be facilitated with an application programming interface (120) that, in one arrangement, can comprise a set of functions available to the translator including an emit fragment function with which the translator can emit code fragments into code caches of the dynamic execution layer interface, and an execute function with which the translator can request execution of code fragments contained within the at least one code cache.

## Description

This disclosure generally relates to dynamic transformation of executing binary program code. More particularly, the present invention relates to a system and method for executing program code, in the preferred embodiment for supporting emulation of a computer system through dynamic code caching and transformation.

Operating system software and user application software are written to execute on a given type of computer system. That is, software is written to correspond to the particular instruction set in a computer system, *i.e.*, the set of instructions that the system recognizes and can execute. If the software is executed on a computer system without an operating system, the software must also be written to correspond to the particular set of components and/or peripherals in the computing system.

Computer hardware (*e.g.,* microprocessors) and their instruction sets are often upgraded and modified, typically to provide improved performance. Unfortunately, as computer hardware is upgraded or replaced, the preexisting software, which often is created at substantial cost and effort, is rendered obsolete. Specifically, in that the software was written for an instruction set of the original hardware, it contains instructions that a new host hardware will not understand.

Various solutions are currently used to deal with the aforementioned difficulty. One such solution is to maintain obsolete computer hardware instead of replacing it with the upgraded hardware. This alternative is unattractive for several reasons. First, a great deal of expense and effort is required to maintain such outdated hardware. Second, where the new hardware is more powerful, failing to replace the outdated hardware equates to foregoing potentially significant performance improvements for the computer system.

A further solution to the problem, and perhaps most common, it to simply replace all of the software each time the underlying hardware is replaced. This solution is equally unattractive, however, in view of the expense and effort required for such an endeavor as well as the learning curve associated with training the users of the previous software use the new software.

Another potential solution to the problem is to provide a virtual machine environment in which the original software can be executed on a new host system. This solution has the advantage of neither requiring maintenance of outdated hardware nor complete replacement of the original software. Unfortunately, however, present emulation systems lack the resources to provide a hardware emulation for real-world software applications due to the complexity associated with emulating each action of the original hardware. For example, to emulate a computer system for an actual program such as an operating system, the emulation system must be able to handle asynchronous events that may- occur such as exceptions and interrupts. Furthermore, current systems are highly customized (e.g., are point solutions) and are therefore platform dependent.

The present invention seeks to provide. improved execution of program code and improved computer operability.

According to an aspect of the present invention there is provided a method of executing program code as specified in claim 1.

According to another aspect of the present invention there is provided an application programming interface as specified in claim 6.

The preferred embodiments can provide a system and method for emulating a computer system that avoids one or more of the above-noted problems.

In one embodiment, the system and method pertain to fetching program code, translating program code, emitting translated program code into at least one code cache, and executing translated code within the at least one code cache in lieu of associated program code when a semantic function of the associated program code is requested.

The present disclosure also relates to a system for executing program code that was written for an original computer system on a different host computer system. In one embodiment, the system comprises an emulator, a translator, a virtual machine that comprises a dynamic execution layer interface including a core having at least one code cache in which code fragments can be cached and executed, and an application programming interface that links the translator to the virtual machine.

Furthermore, the present disclosure relates to an application programming interface configured to link a translator to a dynamic execution layer interface in an computer system emulating system. In one embodiment, the application programming interface comprises a set of functions available to the translator including an emit fragment function with which the translator can emit code fragments into code caches of the dynamic execution layer interface, and an execute function with which the translator can request execution of code fragments contained within the at least one code cache.

Embodiments of the present invention are described below, by way of example only, with reference to the accompanying drawings, in which:
FIG. 1 is a block diagram illustrating an example system that is configured to provide a virtual machine environment for software to be executed on a host computer system.
FIG. 2 is a flow diagram that illustrates operation of the system shown in FIG. 1 in providing a virtual machine environment.
FIG. 3 is a block diagram illustrating an example of a dynamic execution layer interface (DELI) as used in the system of FIG. 1
FIG. 4 is a block diagram of an example configuration and operation of a core of the DELI shown in FIG. 3.
FIG. 5 is a block diagram of an example host computer system on which the system shown in FIG. 1 can be operated.
FIG. 6 is a list of various example functions available to a client from an application programming interface shown in FIG. 1.

Disclosed is a system and method for executing software written for a computer system different from that of a host computer system by emulating the original computer system in a virtual machine environment. As is explained below, this emulation of the original computer system is facilitated with a dynamic execution layer interface that is utilized via a application programming interface. To facilitate description of the system and method, example systems are discussed with reference to the figures. Although these systems are described in detail, it will be appreciated that they are provided for purposes of illustration only and that various modifications are feasible without departing from the scope of the claims. After the description of the systems, examples of operation of the systems are provided to explain the manners in which system emulation can be facilitated.

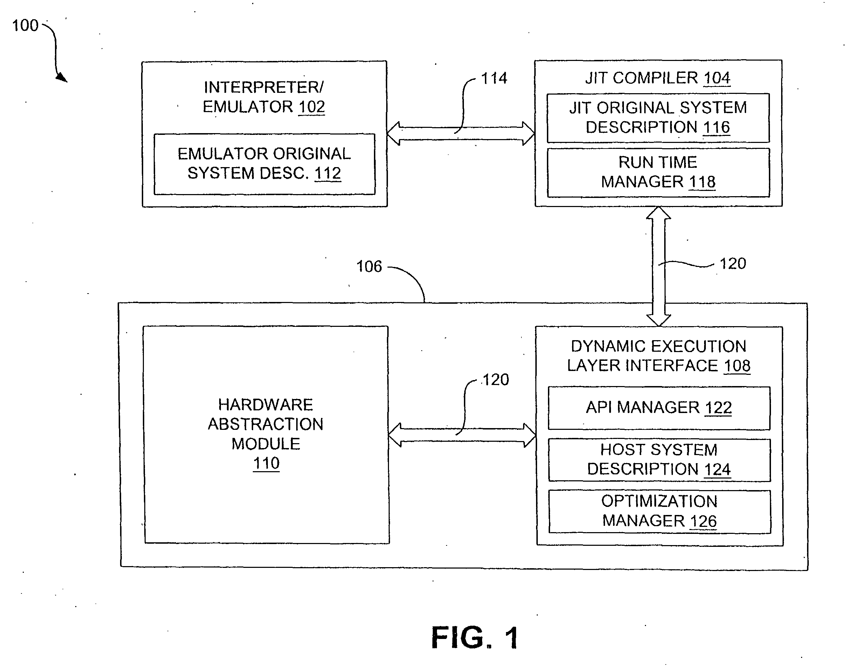

Referring first to FIG. 1, illustrated is a simplified emulation system 100 that is capable of providing a virtual machine environment in which software can be executed. As indicated in this figure, the system 100 generally comprises an interpreter/emulator 102, a just-in-time (JIT) compiler 104, and a virtual machine 106 that can include a dynamic execution layer interface (DELI) 108 and a hardware abstraction module (HAM) 110. Generally speaking, the interpreter/emulator 102 emulates the hardware of the original computer system for which the software (e.g., a program) running on the system 100 was written. Accordingly, the interpreter/emulator 102, from the perspective of a program executed by the system 100, performs all of the actions of the original hardware would have performed during native execution of the program.

As is suggested by its name, the interpreter/emulator 102 implements an interpreter to provide emulation of the original computer system. As is generally known to persons having ordinary skill in the art, interpreters receive code, interpret it by determining the underlying semantics associated with the code, and carry out the semantic actions. As shown in FIG. 1, the interpreter/emulator 102 normally comprises an original system description 112 that comprises the information about the instruction set of the original system hardware (*i.e.*, that being emulated) that is needed to properly emulate the original system. Although an interpreter/emulator is explicitly identified in the figure and described herein, it is to be understood that, more generally, an emulation functionality is being provided. Accordingly, the interpreter/emulator could comprise a different type of emulator, such as a translator/emulator. Furthermore, it is to be appreciated that an emulator need not be provided at all where the JIT compiler 104 (described below) is capable of providing this functionality.

The interpreter/emulator 102 is linked to the JIT compiler 104 with an interface 114. As its name suggests, the JIT compiler 104 is configured to provide run time compilation (*i*.*e*., translation) of software. More particularly, the JIT compiler 104 provides binary translation of the program to be executed. In operation, the JIT compiler 104 receives a representation of the program and translates it into an equivalent program (*i*.*e*., one having the same semantic functionality) for the target hardware of the host computer system. Similar to the interpreter/emulator 102, the JIT compiler 104 comprises a system description 116 that comprises information about the instruction set of the original system hardware. The system description 116, however, comprises the information the JIT compiler 104 needs to properly translate code into the desired form. In addition to the system description 116, the JIT compiler 104 comprises a run time manager 118 that, as is described below, permits the DELI 108 to invoke callback methods into the JIT compiler 104 to, for instance, notify the JIT compiler as to the occurrence of certain events. When such callback methods are invoked, the run time manager 118 is used to implement the callback methods.

The JIT compiler 104 is linked to the virtual machine 106 with a application programming interface (API) 120. This API 120 facilitates communications between the JIT compiler 104 and the virtual machine 106 and, more specifically, the DELI 108. Accordingly, the API 120 can be used by the JIT compiler 104 to access, for instance, code caching and linking services of the DELI 108 and can be used by the DELI to invoke the callback methods into the JIT compiler. As is further indicated in FIG. 1, the DELI 108 can comprise an application programming interface (API) manager 122, a host system description 124, and an optimization manager 126. The host system description 124 comprises the information that the DELI 108 needs about the host computer system such as its hardware, instruction set, *etc.* Operation of the API manager 122 and the optimization manager 126 is described in detail below.

In addition to the DELI 108, the virtual machine 106 also can include the HAM 110. In that the details of the configuration and operation of the HAM 110 are not specifically relevant to the present disclosure, a detailed description of the HAM is not provided herein. However, it suffices to say that the HAM 110 is generally configured to manage the hardware-related events (*e.g.*, interrupts) of the original computer system that are to be emulated on the host computer system. The services of the HAM 110 can be utilized by the DELI 108 via the API 120 which, as indicated in FIG. 1, also links the DELI to the HAM.

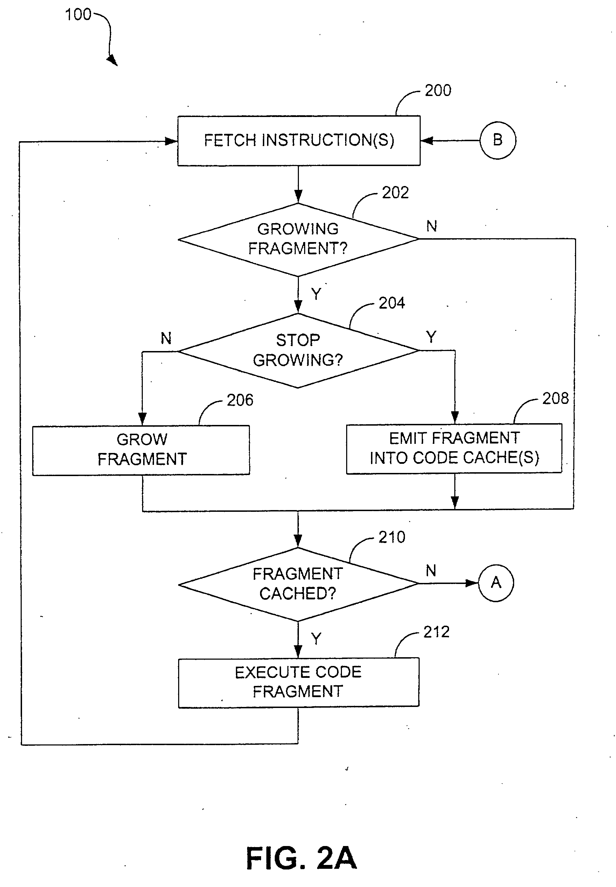

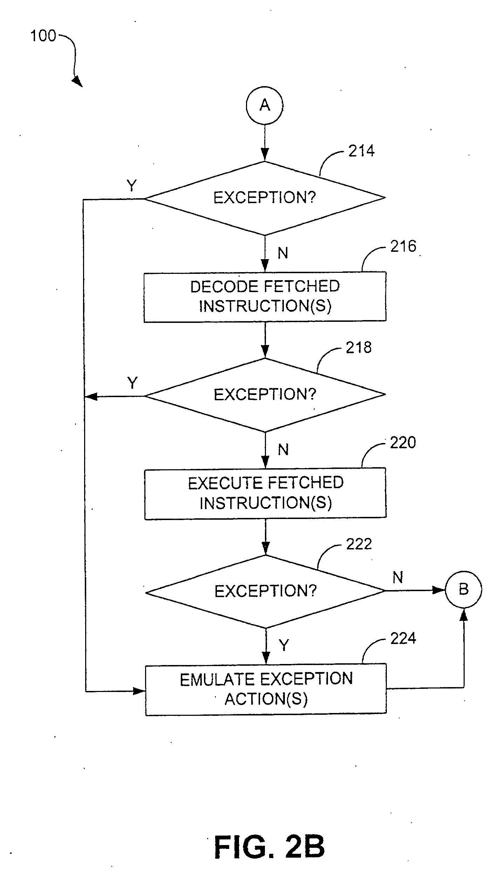

The general construction of the system 100 having been provided above, an example of operation of the system will now be provided in relation to FIGS. 2A and 2B. Beginning with block 200 of FIG. 2A, one or more program instructions are first fetched from memory by the interpreter/emulator 102. In the emulation context, this comprises accessing the original memory address from the original computer system and using it to identify the actual location of the instruction(s) on the host computer system. Once the instruction(s) have been fetched, flow is continued by the JIT compiler 104.

With reference to decision element 202, the JIT compiler 104 first determines whether the system 100 is currently growing a code fragment by linking various program instructions together. As is known in the art, such linking is typically performed to increase execution efficiency of the code. If the system is not currently growing a code fragment, for instance a machine state exists in which the JIT compiler 104 is not able to grow a fragment, flow continues to decision element 210 described below. If, on the other hand, the system 100 is growing a code fragment, flow continues to decision element 204 at which the JIT compiler 104 determines whether to continue growing the code fragment (by adding the fetched instruction(s) to the fragment) or stop growing the code fragment. This determination is made in view of certain internal criteria. For example, the JIT compiler 104 can be configured to grow a fragment until a basic block of code containing a branch (*i.e.*, control flow instructions) is obtained.

If the JIT compiler 104 determines not to stop growing the fragment (*i.e.*, to continue growing the fragment), flow continues to block 206 at which the fragment is grown, *i.e.* where the fetched program instruction(s) is/are added to the fragment that is being grown. If the JIT compiler 104 determines to stop growing the fragment, however, flow continues to block 208 at which a translation for the existing code fragment is emitted into a code cache of the DELI 108 via the API 120. A detailed discussion of the manner in which such code fragments can be emitted to the DELI 108 is provided below. As is explained in that description, once the code fragment has been cached in the DELI 108, it can be executed natively from the DELI code cache(s) when the semantic function of the original code is required. Such operation permits greatly improved efficiency in executing the program on the host computer in that the overhead associated with translating the original code is avoided the next time the semantic function is required. In addition to emitting code fragment to the code cache(s), the JIT compiler 104 associates the original instruction(s) with the emitted fragment with an identifier such as a tag so that the JIT compiler will know that a translation for the original program instruction(s) already resides in the code cache(s) of the DELI 108. Once the code has been cached, it can be linked according to various policies provided to the DELI 108 to further increase system efficiency.

Irrespective of whether fragment growth is continued or whether a translation for the code fragment is emitted, flow next continues to decision element 210 at which the JIT compiler 104 determines whether a translation of the fetched instruction(s) has been cached, *i.e.* is contained within a code cache of the DELI 108. If so, execution then jumps to the code cache(s) of the DELI 108 and the translated code fragment is executed natively, as indicated in block 212. Execution continues in the code cache(s) until such time when a reference to code not contained therein (*e.g.,* a cache miss) is encountered. At this point, flow returns to block 200 and the next program instruction(s) is/are fetched.

Returning to decision element 210, if a translation of the fetched instruction(s) has not been cached, flow returns to the interpreter/emulator 102, which is illustrated in FIG. 2B. Beginning with decision element 214 of this figure, the interpreter/emulator 102 determines whether the instruction fetching action that was conducted in block 200 would have created an exception in the original computer system being emulated. By way of example, such an exception could have arisen where there was no permission to access the portion of memory at which the instruction(s) would have been located. This determination is made with reference to the information contained within the system description 112. If such an exception would have occurred, flow continues down to block 224 at which the exception action or actions that would have been taken by the original computer system is/are emulated by the interpreter/emulator 102 for the benefit of the program.

Assuming no exception arose at decision element 214, flow continues to block 216 at which the fetched instruction(s) is/are decoded by the interpreter/emulator 102. Generally speaking, this action comprises interpreting the nature of the instruction(s), *i.e.* the underlying semantics of the instruction(s). Next, with reference to decision element 218, it can again be determined whether an exception would have occurred in the original computer system. Specifically, it is determined whether the instruction(s) would have been illegal in the original system. If so, flow continues to block 224 and the exception action(s) that would have been taken by the original computer system are emulated. If not, however, flow continues to block 220 at which the semantics of the fetched instruction(s) are executed by the interpreter/emulator 102 to emulate actual execution of the instruction(s) by the original computer system. At this point, with reference to decision element 222, it can once again be determined whether an exception would have arisen in the original computer system. In particular, it can be determined whether it would have been illegal to execute the instruction(s) in the original system. If an exception would have arisen, flow continues to block 224. If no exception would have arisen, however, flow returns to block 200 and one or more new program instructions are fetched.

Notably, in the initial stages of operation of the system 100, *i.e.* when emulation is first provided for the program, most execution is conducted by the interpreter/emulator 102 in that little or no code resides within (*i.e.*, has been emitted into) the code cache(s) of the DELI 108. However, in a relatively short amount of time, most if not all execution is conducted within the code cache(s) of the DELI 108 due to the emitting step (block 208). By natively executing code within the code cache(s), the overhead associated with interpreting and emulating is avoided (in that it has already been performed), thereby greatly increasing emulation efficiency. Although the above system has been described as caching translated code, it is to be understood that other forms of code may be cached, if desired. For example, synthesized code can be emitted into the code cache(s) of the DELI 108 via an emit function of the API 120.

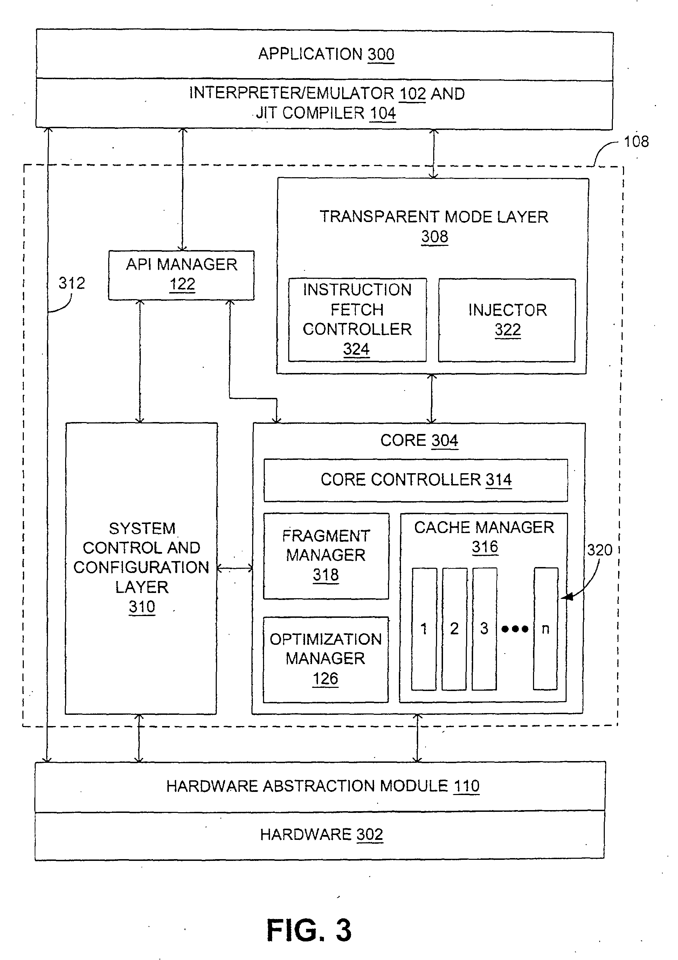

As identified above in relation to FIGS. 1 and 2, emulation efficiency is significantly increased due to the provision of the DELI 108. FIG. 3 illustrates an example configuration for the DELI 108. Generally speaking, the DELI 108 comprises a generic software layer written in a high or low level language that resides between applications, including or not including an operating system (O/S), and hardware to untie application binary code from the hardware. Through this arrangement, the DELI 108 can provide dynamic computer program code transformation, caching, and linking services which can be used in a wide variety of different applications such as emulation, dynamic translation and optimization, transparent remote code execution, remapping of computer system functionality for virtualized hardware environments program, code decompression, code decrypting, *etc.* Generally speaking, the DELI 108 can provide its services while operating in a transparent mode, a nontransparent mode, or combinations of the two. In the transparent mode, the DELI 108 automatically takes control of an executing program in a manner in which the executing program is unaware that it is not executing directly on computer hardware. In the nontransparent mode, the DELI 108 exports its services through the API 120 to the application (client) to allow the application to control how the DELI reacts to certain system events.

As depicted in FIG. 3, the DELI 108 resides between at least one application (program) 300 and computer hardware 302 of the host computing system. In that the application 300 was written for the original computer system that is being emulated, the application is unaware of the DELI's presence. Underneath the application 300 resides a client which, in this case, comprises the interpreter/emulator 102 and the JIT compiler 104. Unlike the application 300, the client is aware of the DELI 108 and is configured to utilize its services.

The DELI 108 can include four main components including a core 304, an API manager 122, a transparent mode layer 308, and a system control and configuration layer 310. Generally speaking, the core 304 exports two primary services to both the API manager 122 (and therefore to the API 120) and the transparent mode layer 308. The first of these services pertains to the caching and linking of native code fragments or code fragments which correspond to the instruction set of the hardware 302. The second pertains to executing previously cached code fragments. The API manager 122 exports functions to the client (*e.g.*, JIT compiler 104) that provide access to the caching and linking services of the core 304 in the nontransparent mode of operation. The transparent mode layer 308, where provided, enables the core 304 to gain control transparently over code execution in the transparent mode of operation as well as fetch code fragments to be cached. Finally, the system control and configuration layer 310 enables configuration of the DELI 108 by providing policies for operation of the core 304 including, for example, policies for the caching, linking, and optimizing of code. These policies can, for example, be provided to the layer 310 fom the client via the API manager 122. The system control and configuration layer 310 also controls whether the transparent mode of the DELI 108 is enabled, thus determining whether the core 304 receives input from the API manager 122, the transparent mode layer 308, or both. As is further indicated in FIG. 3, the system 306 can include a bypass path 312 that can be used by the application 300 to bypass the DELI 108 so that the application can execute directly on the hardware 302, where desired.

As is shown in FIG. 3, the core 304 comprises a core controller 314, a cache manager 316, a fragment manager 318, and the optimization manager 126 first identified in FIG. 1. The core controller 314 functions as a dispatcher that assigns tasks to the other components of the core 304 that are responsible for completing the tasks. The cache manager 316 comprises a mechanism (*e.g.,* set of algorithms) that controls the caching of the code fragments within one or more code caches 320 *(e.g.,* caches 1 through n) according to the policies specified by the system control and configuration layer 310 as well as the fragment manager 318 and the optimization manager 126. The one or more code caches 320 of the core 304 can, for instance, be located in specialized memory devices of the hardware 302, or can be created in the main local memory of the hardware. Where the code cache(s) 320 is/are mapped in specialized memory devices, greatly increased performance can be obtained due to reduced instruction cache refill overhead, increased memory bandwidth, *etc.* The fragment manager 318 specifies the arrangement of the code fragments within the code cache(s) 320 and the type of transformation that is imposed upon the fragments. Finally the optimization manager 126 contains the set of optimizations that can be applied to the code fragments to optimize their execution.

As noted above, the API manager 122 exports functions to the application 300 that provide access to DELI services. More specifically, the API manager 122 exports caching and linking services of the core 304 to the client (*e.g.,* JIT compiler 104) via the API 120. These exported services enable the client to control the operation of the DELI 108 in the nontransparent mode by, for example, explicitly emitting code fragments to the core 304 for caching and instructing the DELI 108 to execute specific code fragments out of its code cache(s) 320. In addition, the API manager 122 also can export functions that initialize and discontinue operation of the DELI 108. For instance, the API manager 122 can initiate transparent operation of the DELI 108 and further indicate when the DELI is to cease such operation. Furthermore, the API manager 122 also, as mentioned above, facilitates configuration of the DELI 108 by delivering policies specified by the client to the core 304 (e.g., to the fragment manager 318 and/or the optimization manager 126).

With further reference to FIG. 3, the transparent mode layer 308 can include an injector 322 that can be used to gain control over an application transparently. When the DELI 108 operates in a completely transparent mode, the injector 322 is used to inject the DELI into the application 300 before the application begins execution so that the application can be run under DELI control. Control can be gained by the injector 126 in several different methods, each of which loads the application binaries without changing the virtual address at which the binaries are loaded. Examples these methods are described in U.S. Patent Application Serial No. 09/924,260, filed August 8, 2001, entitled "Dynamic Execution Layer Interface for Explicitly of Transparently Executing Application or System Binaries".

In the emulation context, however, such completely transparent operation is typically not used in that the client is configured to use the DELI's services in an explicit manner.

As noted above, the system control and configuration layer 310 enables configuration of the DELI 108 by providing policies for various actions such as the caching and linking of code. More generally, the policies typically determine how the DELI 108 will behave. For instance, the layer 310 may provide policies as to how fragments of code are extracted from an application, how fragments are created from the original code, how multiple code fragments can be linked together to form larger code fragments, *etc.* The layer's policies can be static or dynamic. In the former case, the policies can be hardcoded into the DELI 108, fixing the configuration at build time. In the latter case, the policies can be dynamically provided by the client through function calls in the API 120. Implementation of the policies can control the manner in which the DELI 108 reacts to specific system and/or hardware events *(e.g.,* exceptions and interrupts). In addition to the policies noted above, the system control and configuration layer 310 can specify the size of the code cache(s) 320, whether a log file is created, whether code fragments should be optimized, *etc.*

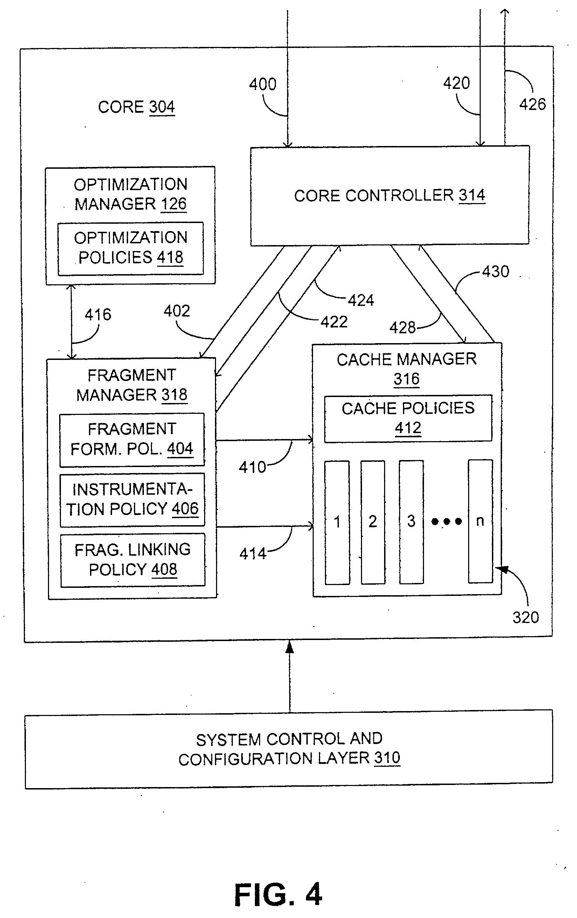

FIG. 4 illustrates an example configuration of the core 304 and its operation. As indicated in this figure, the core 304 accepts two primary types of requests from the API manager 122 or the transparent mode layer 308. First, requests 400 can be accepted for caching and linking a code fragment through a function interface. In its most basic form, such a request can comprise a function in the form of, for instance, "Deli_emit_fragment(tag)", which receives a code fragment as its parameters and an identifier *(e.g.,* tag) to store in the DELI cache(s) 320. In another example, the core 304 can accept requests for initiating execution at a specific code fragment tag through a function interface such as "Deli_exec_fragment(tag)", which identifies a code fragment stored in the cache(s) 320 to pass to the hardware 302 for execution.

The core controller 314 processes these requests and dispatches them to the appropriate core module. A request 402 to emit a code fragment with a given identifier can then be passed to the fragment manager 318. The fragment manager 318 transforms the code fragment according to its fragment formation policy 404, possibly instruments the code fragment according to its instrumentation policy 406, and links the code fragment together with previously cached fragments according to its fragment linking policy 408. For example, the fragment manager 318 may link multiple code fragments in the cache(s) 320, so that execution jumps to another code fragment at the end of executing a code fragment, thereby increasing the length of execution from the cache(s). To accomplish this, the fragment manager 318 issues fragment allocation instructions 410 to the cache manager 316. The fragment manager 318 then sends a request to the cache manager 316 to allocate the processed code fragment in the code cache(s) 320.

The cache manager 316 controls the allocation of the code fragments and typically is equipped with its own cache policies 412 for managing the cache space. However, the fragment manager 318 may also issue specific fragment deallocation instructions 414 to the cache manager 316. For example, the fragment manager 318 may decide to integrate the current fragment with a previously allocated fragment, in which case the previous fragment may need to be deallocated. In some arrangements, the cache manager 316 and fragment manager 318 can manage the code cache(s) 320 and code fragments in the manner shown and described in U.S. Patent No. 6,237,065, issued May 22, 2001, entitled "A Preemptive Replacement Strategy for a Caching Dynamic Translator Based on Changes in the Translation Rate."

Alternatively, management of the code cache(s) 320 and code fragments may be performed in the manner shown and described in U.S. Patent Application Serial No. 09/755,389, filed January 5, 2001, entitled "A Partitioned Code Cache Organization to Exploit Program Locality."

Prior to passing a fragment to the cache manager 316, the fragment manager 318 may pass (416) the fragment to the optimization manager 126 to improve the quality of the code fragment according to its optimization policies 418. In some arrangements, the optimization manager 126 may optimize code fragments in the manner shown and described in U.S. Patent Application Serial No. 09/755,381, filed January 5, 2001, entitled "A Fast Runtime Scheme for Removing Dead Code Across Linked Fragments."

Alternatively, the optimization manager 126 may optimize code fragments in the manner shown and described in U.S. Patent Application Serial No. 09/755,774, filed January 5, 2001, entitled "A Memory Disambiguation Scheme for Partially Redundant Load Removal."

Notably, the optimization manager 126 may also optimize code fragments using classical compiler optimization techniques, such as elimination of redundant computations, elimination of redundant memory accesses, inlining functions to remove procedure call/return overhead, dead code removal, implementation of peepholes, *etc.* Typically, the optimization manager 126 deals with an intermediate representations (IRs) of the code that is to be optimized. In such an arrangement, the client may be aware of that IR code is needed and can call upon the API 120 to translate code from native to IR for purposes of optimization, and back again to native once the optimization(s) has been performed.

As mentioned above, the fragment manager 318 transforms the code fragment according to its fragment formation policy 404. The transformations performed by the fragment manager 318 can include code relocation by, for instance, changing memory address references by modifying relative addresses, branch addresses, *etc.* The layout of code fragments may also be modified, changing the physical layout of the code without changing its functionality (*i.e.*, semantics). These transformations are performed by the fragment manager 318 on fragments received through the API 120 and from the instruction fetch controller 324 of the transparent mode layer 308.

As identified above, the other primary type of request accepted by the DELI core 304 is a request 420 to execute a fragment identified by a given identifier (*e.g.,* tag). In such a case, the core controller 314 issues a lookup request 422 to the fragment manager 318, which returns a corresponding code cache address 424 if the fragment is currently resident and active in the cache(s) 320. By way of example, the fragment manager 318 can maintain a lookup table of resident and active code fragments in which a tag can be used to identify the location of a code fragment. Alternatively, the fragment manager 318 or cache manager 316 can use any other suitable technique for tracking whether code fragments are resident and active. If the fragment is not currently resident and active in the cache(s) 320, the fragment manager 318 returns an error code to the core controller 314, which returns (426) the fragment tag back to the initial requester as a cache miss address. If, on the other hand, the fragment is currently resident and active, the core controller 314 then patches (428) the initial request to the cache manager 316 along with its cache address. The cache manager 316, in turn, transfers control to the addressed code fragment in its code cache(s) 320, thus executing the addressed code fragment. Execution then remains focused in the code cache(s) 320 until a cache miss occurs, *i.e.*, until a copy for the next application address to be executed is not currently resident in the cache(s). This condition can be detected, for instance, by an attempt of the code being executed to escape from the code chache(s) 320. A cache miss is reported (430) from the cache manager 316 to the core controller 314 and, in turn, back (426) to the initial requester.

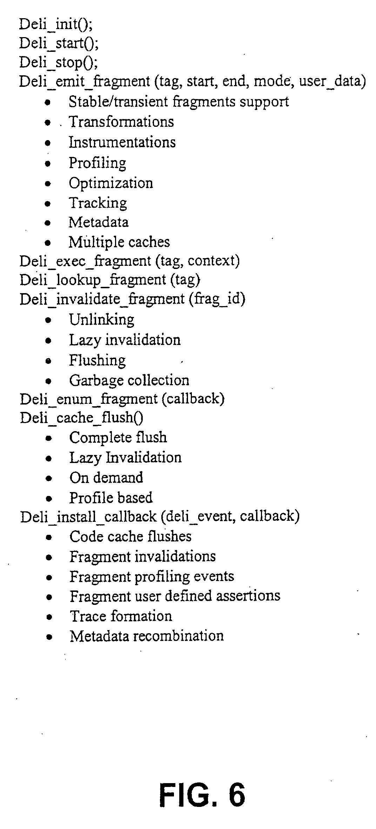

Although two primary requests have been identified above in relation to FIG. 4 (*i.e.*, emitting and executing), it is to be understood that many other types of requests may be made, particularly when emulating a computer system. Example of other requests (functions) are described below in relation to FIG. 6.

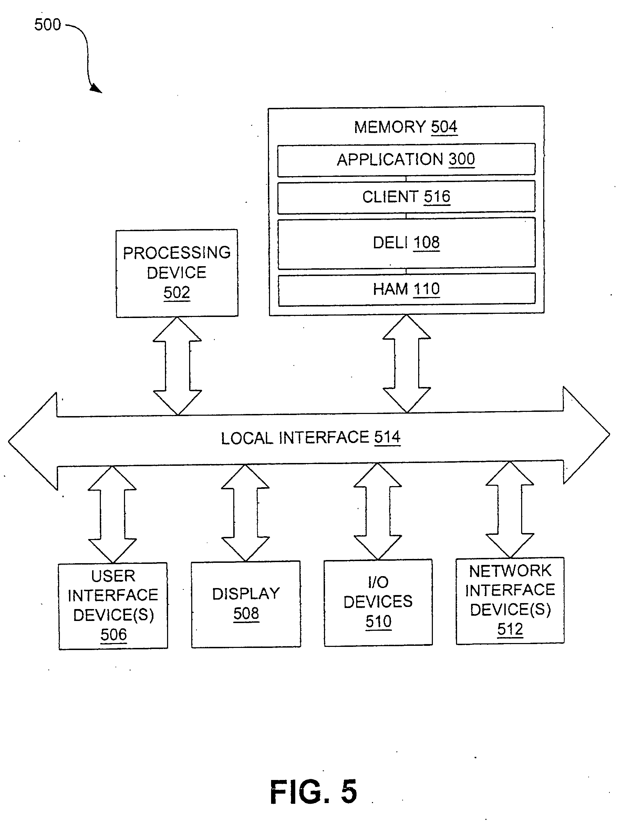

FIG. 5 is a block diagram illustrating an example host computer system 500 on which the system 100 can be executed. Generally speaking, the computer system 500 can comprise any one of a wide variety of wired and/or wireless computing devices, such as a desktop computer, portable computer, dedicated server computer, multiprocessor computing device, cellular telephone, personal digital assistant (PDA), handheld or pen-based computer, and so forth. Irrespective its specific arrangement, the computer system 500 can, for instance, comprise a processing device 502, memory 504, one or more user interface devices 506, a display 508, one or more input/output (I/O) devices 510, and one or more networking devices 512, each of which is connected to a local interface 514.

The processing device 502 can include any custom made or commercially available processor, a central processing unit (CPU) or an auxiliary processor among several processors associated with the computer system 500, a semiconductor based microprocessor (in the form of a microchip), a macroprocessor, one or more application-specific integrated circuits (ASICs), a plurality of suitably configured digital logic gates, and other well known electrical configurations comprising discrete elements both individually and in various combinations to coordinate the overall operation of the computing system.

The memory 504 can include any one of a combination of volatile memory elements (*e.g.,* random access memory (RAM, such as DRAM, SRAM, *etc.*)) and nonvolatile memory elements (*e.g.*, ROM, hard drive, tape, CDROM, *etc.).* The memory 504 typically comprises the application 300, the client 516, the DELI 108, and the HAM 110, each of which has already been described above. Persons having ordinary skill in the art will appreciate that the memory 504 can, and typically will, comprise other components which have been omitted for purposes of brevity.

The one or more user interface devices 506 comprise those components with which the user can interact with the computing system 500. For example, where the computing system 500 comprises a personal computer (PC), these components can comprise a keyboard and mouse. Where the computing system 500 comprises a handheld device (*e.g.,* PDA, mobile telephone), these components can comprise function keys or buttons, a touch-sensitive screen, a stylus, *etc.* The display 508 can comprise a computer monitor or plasma screen for a PC or a liquid crystal display (LCD) for a handheld device.

With further reference to FIG. 5, the one or more I/O devices 510 are adapted to facilitate connection of the computing system 500 to another system and/or device and may therefore include one or more serial, parallel, small computer system interface (SCSI), universal serial bus (USB), IEEE 1394 (*e*.*g*., Firewire™), and/or personal area network (PAN) components. The network interface devices 512 comprise the various components used to transmit and/or receive data over a network. By way of example, the network interface devices 512 include a device that can communicate both inputs and outputs, for instance, a modulator/demodulator (*e.g.,* modem), wireless (*e.g.,* radio frequency (RF)) transceiver, a telephonic interface, a bridge, a router, networkcard, *etc.*

Various software and/or firmware has been described herein. It is to be understood that this software and/or firmware can be stored on any computer-readable medium for use by or in connection with any computer-related system or method. In the context of this document, a computer-readable medium denotes an electronic, magnetic, optical, or other physical device or means that can contain or store a computer program for use by or in connection with a computer-related system or method. These programs can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device.

The computer-readable medium can be, for example but not limited to, an electronic, magnetic, optical, electromagnetic, infrared, or semiconductor system, apparatus, device, or propagation medium. More specific examples (a nonexhaustive list) of the computer-readable medium include an electrical connection having one or more wires, a portable computer diskette, a random access memory (RAM), a read-only memory (ROM), an erasable programmable read-only memory (EPROM, EEPROM, or Flash memory), an optical fiber, and a portable compact disc read-only memory (CDROM). Note that the computer-readable medium can even be paper or another suitable medium upon which a program is printed, as the program can be electronically captured, via for instance optical scanning of the paper or other medium, then compiled, interpreted or otherwise processed in a suitable manner if necessary, and then stored in a computer memory.

As identified above, emulation of the original computer system is facilitated in large part due to the functionality provided by the API 120. In a trivial context, the API 120 would only need to enable emission of code fragments to the DELI code cache(s) 320 and submit requests to execute these fragments in the manner described above in relation to FIG. 4. Where binary translation is to be provided for a real-world program such as an O/S, however, the API 120 must provide the additional functionality to deal with asynchronous events such as exceptions and interrupts, as well as other complications that result from emulating all the aspects of the original computer system hardware. Therefore, a "smarter" interface is needed to provide a practical emulation system.

FIG. 6 provides a list of various example API entries that may be useful in facilitating computer system emulation. Although a specific group of entries is shown in FIG. 6, it is to be understood that they have been provided for purposes of illustration only and are not intended to limit the present disclosure. Generally speaking, the entries reflect the basic functionality of the API 120 and appear as functions to the client (*e.g.*, JIT compiler 104). The first of the identified functions, "Deli_init()" is used to initialize the DELI 108 in the nontransparent (explicit) mode of operation as well as specify various information regarding operation of the DELI 108 such as policies regarding optimization, fragment management, *etc.* Once the DELI 108 has been initiated by the client, its operation can be controlled, *i.e.* started and stopped, using "Deli_start()" and "Deli_stop()" functions, respectively.

The "Deli_emit_fragment(tag, start, end, mode, user_data)" function is used by the client to emit code fragments into the code cache(s) 320 and provide instructions as to what operations to perform on and/or how to use the code fragments. As identified in FIG. 6, these instructions can include whether a fragment is to be treated as a stable or transient fragment. When designated as a stable fragment, the fragment will be treated with greater importance and, for example, could be made less likely to be flushed from the code cache(s) 320 through housekeeping performed and/or more expensive optimizations can be applied to the fragment by the DELI 108 during operation. By way of example, the stable fragments are those that are most frequently used in running the application 300. Transient fragments, on the other hand, are those which normally will be used with less frequency and therefore can be treated in a manner which makes them easier to remove from the code cache(s) 320, or lightly optimize reduce run-time overhead.

In addition to assigning a stable or transient status, the client can specify what transformations are to be conducted on the code fragment. For instance, where certain branches (*i.e.*, control flow instructions) within the fragment are conditional, the client can request that the DELI 108 transform the fragment so as to make it less likely that the condition is satisfied (*i.e.*, that the branch is taken) to improve execution efficiency.

The client can further request that various instrumentations be added to the code fragment so that the behavior of the code fragment can be monitored at run time. For example, if the client would like to be informed as to the number of times the fragment has been executed, the DELI 108 could provide an appropriate instrumentation (*e.g.,* program counter) to the code fragment that will count "one" each time the fragment is natively executed within the code cache(s) 320. Alternatively, an instrumentation could be used to notify the client as to when a certain event occurs (*e.g.,* the nth time the fragment has been executed) or some user defined assertion is not satisfied. This information can be shared with the client via a callback method facilitated by the API 120. Once this information has been relayed back to the client, the client can, based upon that information, determine what actions (*e.g.*, optimizations) are to be performed on the code fragment, if any. Operating in this manner, the overhead associated with the action to be performed (*e.g.,* reoptimization of the fragment) can be avoided until such time when it is determined that its performance would in fact be useful.

In addition to requesting instrumentations, the client can also request that the DELI 108 use profiling techniques to monitor execution of the emitted code fragment, as well as the other code fragments contained within the code cache(s) 320. Such profiling can be used to, for instance, determine the amount of time that is spent in executing the various code fragments and provide an indication to the client of what further actions may be necessary to improve performance. Although an instrumentation could be used to provide a general indication of this time (*e.g.*, frequency of execution), more precise is to have the DELI 108 provide a mechanism that, through use of a timer facility (*e.g.* a hardware timer device capable of interrupting the application when a programmable amount of time has elapsed), periodically determines which code fragments are being executed to obtain a statistical sampling of execution of the code within the cache(s) 320 for purposes of deriving an estimate of how often each fragment is executed. Again, the client can be apprised of this information via a callback method facilitated by the API 120.

The client can further specify the optimation(s) that is/are to be performed on the code fragment that is being emitted into the DELI code cache(s) 320. Specifically, the "Deli_emit_fragment()" function can be used to instruct the API manager 122 of the DELI 108 as to how to instruct the optimization manager 126 (in IR code) as to which optimizations are to be performed under what circumstances. Although the client can be configured to optimize code itself, it may be preferable to pass this responsibility on to the DELI 108 such that the design of the client may be kept relatively simple.

Another action that the client can request of the DELI 108 is tracking of the code fragment. With such tracking, the client can be notified as to various information regarding the fragment such as, for example, where (*e.g.,* in which cache 320) the code fragment has been placed or when a fragment has been evicted from the code cache(s). In the former example, the location information can be used to gauge, for instance, how often the fragment is being used or how old the fragment is. In the latter example, the eviction information can be used to keep track of which code fragments are currently resident in the code cache(s) 320. This may be especially useful when, for example, the system 100 is designed to emulate real-world applications, such as an O/S, to deal with certain properties of the original computer system being emulated, *e.g.,* the ability to support self-modifying applications and/or the presence in the original computer system of a MMU that could, under certain circumstances, render obsolete or even invalid fragments still resident and active in the code -cache(s) 320. When tracking is used, the client can monitor the usage of the fragment and determine when instructions regarding treatment of the fragment, or other fragments, should be provided to the DELI 108.

The emit function can further contain metadata that can be used by the client to associate and later retrieve additional information about the code fragment. For example, the JIT compiler 104 could use metada to store the memory location (in the original computer system memory) of the code for which a given fragment is a translation. Typically, this metadata is opaque to the DELI 108 (*i.e.*, its meaning is incomprehensible to the DELI although DELI could be told how to treat it in certain circumstances). In operation, the client can generate queries based upon the metadata associated with the fragments for which information is sought. In addition, the client can provide instructions as to how to combine the metadata of two or more code fragments when the fragments are to be combined together. By way of example, the client can simply request that the DELI 108 merge the metadata. Alternatively, the client can, through tracking, be informed when particular fragments are combined so as to be provided with the opportunity to modify the metadata as it sees fit. In either case, the client will have the ability to locate code fragments after they have been transformed in some manner (*e.g.*, combined with other fragments to form traces) within the code cache(s) 320 and access their associated metadata. As will be appreciated by persons having ordinary skill in the art, this feature can be particularly important where one or more code fragments are to be invalidated. A client (*e.g.* the JIT compiler 104) could keep track of fragments and associated metadata independently from the DELI 108 (by, for instance, using the tags associated with fragments and a separate look-up table for them). Note, however, that this may not be possible for those fragments internally re-combined by the DELI or potentially incorrect when the DELI performs certain actions on the fragments (*e.g.* move them between caches) depending from the nature of the metadata.

Furthermore, the emit function can include instructions as to how to manage multiple caches where the DELI 108 maintains more than one code cache 320. For instance, the client could specify that the shallow (top level) caches are to be used for the most frequently used code fragments and the lower (bottom level) caches are to be used for less frequently used code fragments. With such a caching scheme, fragments can be invalidated from the bottom caches up, such that less important fragments are flushed prior to more important fragments. A similar action can be independently taken by the DELI 108 if the cache manager 316 has been instructed to do so by selecting an appropriate cache policy (*e.g.* profile based fragment promotion to shallower levels).

As noted above, the API 120 can include an execute request function. This function can be in the form of "Deli_exec_fragment(tag, context)" so as to both instruct which code fragments to execute (identified by one or more tags) and the context in which to execute the fragments. In terms of context, the client can identify particular machine states that are to be loaded on to the host system hardware prior to executing a given fragment. Another function facilitated by the API 120 is "Deli_lookup_fragment(tag)" which can be used by the client to retrieve a particular fragment by identifying its tag.

The API 120 can further be used by the client to invalidate fragments in some manner. For instance, the function "Deli_invalidate_fragment(frag_id) can be used to flush a fragment from the code cache(s) or perform some invalidating action that is less expensive than a flush, which requires unlinking of the fragment from all other cached fragments. As indicated in FIG. 6, alternatives to flushing the fragment include unlinking the fragment, performing garbage collection, and performing lazy invalidation. When unlinking is performed, all exits from the fragment are unlinked such that, when the fragment has been executed, control is returned to the client. With this control, the client can, for example, determine the machine state at the time of exit from the fragment (e.g. the JIT compiler 104 is able to assert that the emulated machine state is consistent with the original computer system exceptions/interrupts semantics, if unlinking is requested as a result of one such event). As is known in the art, garbage collection refers to consolidating free space within memory when the space becomes too fragmented. When garbage collection is performed, the code within memory (the cache(s) 320) is recompacted to more efficiently utilize the space. In lazy invalidation, fragments are invalidated (*i.e.*, flushed) only if they are to be executed so that the overhead associated with flushing a fragment (including performing all unlinking) can be avoided until necessary. Specifically, when a fragment that has been slated for lazy invalidation is about to be executed according to execution flow, the fragment is at that time flushed from the code cache(s) 320. (Lazy invalidation may be very useful in a case in which an emulated O/S is in the process of killing an application that was previously running on it and replacing it with another one reusing the same memory locations in the original computer system as a result of that, possibly a large number of fragment seemingly highly linked between them would have required a large number of useless flushes and unlinkings).

With further reference to FIG. 6, the "Deli_enum_fragment(callback)" function is used to enumerate fragments based on some predetermined criteria and, therefore, can be used to facilitate querying the DELI 108 using, for example, information contained within fragment metadata. The "Deli_cache_flush()" function can be used to request flushing of a cache 320 as a whole as opposed to one or more individual fragments. Generally speaking, the flush can be a complete flush or a lazy invalidation flush as described above, or an on demand flush which is implicated when additional space is required or a profile based flush with which a cache 320 will be flushed where it comprises a specified profile.

The "Deli_install_callback(deli_event, callback)" function can be used as a catch-all for controlling the manner in which the client is notified as to various events, such as those identified above, by the DELI 108. Accordingly, this function can be used to notify the client as to the occurrence of code cache flushes, fragment invalidations, *etc.*

With an API 120 that provides functionalities such as those described above in relation to FIG. 6, it is possible to separate the client (*e.g.*, an emulator/translator) functionality from the code caching, binary manipulation, and re-linking conducted by the DELI 108. Through this separation, the development of the client (*e.g.,* JIT compiler) can be decoupled from the low level details of the underlying host hardware and instruction set. Accordingly, development of the client is greatly simplified and the client can more easily be designed for portable use between various different host platforms. Furthermore, this separation facilitates alternative ways of implementing the client. For instance, the API 120 can be used to facilitate mixing and matching of native and translated code.

While particular embodiments of the invention have been disclosed in detail in the foregoing description and drawings for purposes of example, it will be understood by those skilled in the art that variations and modifications thereof can be made without departing from the scope of the following claims.

The disclosures in United States patent application number 09/997,163, from which this application claims priority, and in the abstract accompanying this application are incorporated herein by reference.

## Claims

1. A method of executing a program written for an original computer system on a different host computer system, including the steps of:
fetching program code (200);
translating program code;
emitting translated program code into at least one code cache (208); and
executing translated code within the at least one code cache in lieu of associated program code when a semantic function of the associated program code is requested (212).

2. A method as in claim 1, wherein the step of emitting translated program code into at least one code cache includes emitting translated program code into the at least one code cache via an application programming interface.

3. A method as in claim 1 or 2, including the step of interpreting (216) and executing (220) program code that has not been emitted into the at least one code cache.

4. A method as in claim 3, including the step of emulating actions that would have been performed by the original computer system during execution.

5. A method as in any preceding claim, including the step of, prior to emitting translated program code, growing a code fragment by linking program instructions together (206).

6. An application programming interface (120) configured to link a translator to a dynamic execution layer interface in a computer system emulating system, including:
a set of function means available to the translator including:
an emit fragment function means with which the translator can emit code fragments into code caches of the dynamic execution layer interface, and
an execute function means with which the translator can request execution of code fragments contained within the at least one code cache.

7. An interface as in claim 6, wherein the emit fragment function means can be used to perform at least one of tracking a cached code fragment and associating metadata with a cached code fragment.

8. An interface system as in claim 6 or 7, wherein the set of function means includes a lookup fragment function means with which cached code fragments can be retrieved.

9. An interface as in claim 6, 7 or 8, wherein the set of function means includes an invalidate fragment function means with which individual cached code fragments can be invalidated.

10. An interface as in any one of claims 6 to 9, wherein the set of function means includes an install callback function means with which the translator can be notified as to particular events that occur within the dynamic execution layer interface.
